# EUROPEAN PATENT APPLICATION

(11) **EP 1 942 638 A1**
(43) Date of publication of application: **09.07.2008**
(21) Application number: 07150188.6
(22) Date of filing: 20.12.2007
(51) Int. Cl.: H04M 1/02, H04M 1/725

(54) **Mobile device having a hinge portion with which a hardware accessory is coupleable**

(30) Priority: 03.01.2007 US 619371
(71) Applicant: IXI Mobile (R & D) Ltd., 43655 Ra'anana (IL)
(72) Inventor: Fornell, Peter, Lake Oswego, OR 97034 (US); AMIT, Gad, Belmont, CA 94002 (US); Yoshikazu, Hoshino, San Francisco, CA 94121 (US); Ikeda, Yuji, Pacifica, CA 94044 (US); Etgar, Inbal, San Francisco, CA 94109 (US)
(74) Representative: Modiano, Micaela Nadia

(57) **Abstract**

A mobile device (10) comprising a first casing portion (7), a second casing portion (9) comprising circuitry (17), first (3) and second (4) separated pivotable hinge portions connecting the first and second casing portions to allow the first casing portion to be hingedly openable and closable with respect to the second casing portion, and a fixed hinge portion (5) interposed between the first and second pivotable hinge portions. The fixed hinge portion is formed with a cavity in which is mounted a mating connection (6) suitably configured such that a hardware accessory (13) adapted to increase mobile device functionality is coupleable therewith. The hardware accessory preferably has an independent processor (15) which is automatically recognizable and configurable by a mobile device main processor when the hardware accessory is coupled with the fixed hinge portion. The mobile device is therefore operable when the hardware accessory is not coupled therewith.

## Description

### Field of the Invention

The present invention relates to the field of electronic mobile devices. More particularly, the invention relates to a mobile device having a hinge portion with which a data transmittable hardware accessory is coupleable.

### Background of the Invention

Many electronic mobile devices, such as cellular telephones and the Ogo^{™} of IXI Mobile, USA have gained widespread appeal. The latter provides instant messaging, email, SMS, and voice receiving and transmitting services, as well as Web browsing capabilities. Due to their versatility and relatively high data storage capabilities, these mobile devices are of great benefit to travelers.

A casing of many mobile devices is configured to be hingedly openable and closable. This casing is generally the outer face of the mobile device display, and the ability of the casing to be pivotable when opened or closed affords the mobile device increased compactness. It would be desirable, and this is the intent of the present invention, to utilize the volume of a fixed hinge portion for the insertion therein of a detachable hardware accessory and to thereby increase the versatility of the mobile device.

In many mobile devices, such as disclosed in US 6,073,187, US 6,219,257, US 6,567,677, US 6,785,935, US 6,882,726, US 7,035,665, GB 2 326 051, EP 0 564 092, EP 0 898 405, US 2003/0109232, and US 2005/0231431, a hardware device is permanently housed within the hinge portion. Since the hardware device is permanently housed within the hinge portion, one hardware device cannot be substituted by another according to the discretion of the user.

It is an object of the present invention to provide a mobile device having a hinge portion with which a hardware accessory is coupleable.

It is an additional object of the present invention to provide a hinged mobile device portion from which an automatically recognizable hardware accessory is detachable.

It is an additional object of the present invention to provide a mobile device that can independently operate without the hardware accessory.

Other objects and advantages of the invention will become apparent as the description proceeds.

### Summary of the Invention

The present invention provides a mobile device comprising a first casing portion, a second casing portion comprising circuitry, first and second separated pivotable hinge portions connecting said first and second casing portions to allow said first casing portion to be hingedly openable and closable with respect to said second casing portion, and a fixed hinge portion interposed between said first and second pivotable hinge portions, said fixed hinge portion is formed with a cavity in which is mounted a mating connection suitably configured such that a hardware accessory adapted to increase mobile device functionality is coupleable therewith.

The hardware accessory preferably has an independent processor which is automatically recognizable and configurable by a mobile device main processor when the hardware accessory is coupled with the fixed hinge portion. The mobile device is therefore operable when the hardware accessory is not coupled therewith.

In one aspect, the hardware accessory has a plurality of contacts projecting from one longitudinal end thereof, said contacts being engageable with corresponding recessed portions located at one longitudinal end of the cavity.

In one aspect, the hardware accessory has a plurality of contacts which radially protrude from a periphery thereof, said contacts are adapted to couple with corresponding recessed portions formed on a circumferential wall of the cavity which is contiguous with the second casing portion.

The hardware accessory is selected from the group of detachable short-range transceiver, portable memory unit, music quality enhancer, music player, speaker for enunciating a predetermined tone after the mobile device has performed a desired operation, visual output device, memory card reader, and an interface with a service based on a radio frequency network.

When the hardware accessory is attached to the device, it can be charged from the main battery of the mobile device with reduced charging current. Otherwise, it can be charged from the main battery of the mobile device at a full rate of charging current at times when the main battery of the mobile device is charged from a power supply.

### Brief Description of the Drawings

In the drawings:
- Fig. 1 is a perspective view of a hinge portion of a mobile device with which a hardware accessory is coupleable, according to one embodiment of the invention;
- Fig. 2 is a perspective view of a hinge portion of a mobile device, according to another embodiment of the invention;
- Fig. 3 is a block diagram of a mobile device that is operable with or without a hardware accessory; and

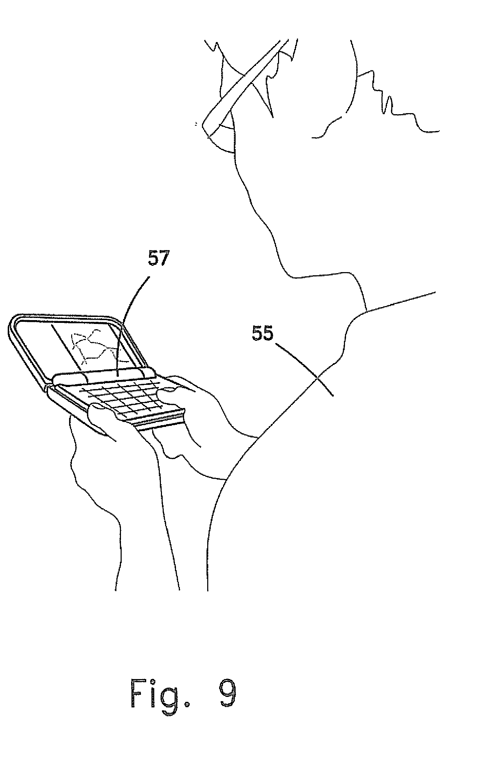

- Figs. 4-9 are schematic illustrations in perspective view of different embodiments of a hardware accessory that is coupleable with a fixed hinge portion of a mobile device.

### Detailed Description of Preferred Embodiments

The mobile device of the present invention utilizes the normally unused volume of the hinge portion for coupling thereto a hardware accessory. Each hardware accessory, which increases the functions and/or performance of the mobile device, is automatically recognizable and therefore may be coupled to the hinge portion without need for a user to manually reconfigure the settings of the mobile device. The mobile device can operate independently with or without the hardware accessory.

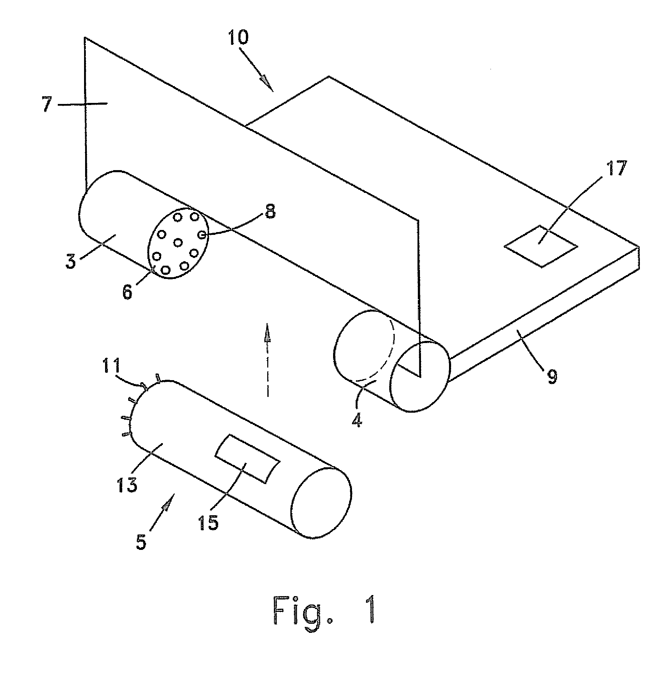

Fig. 1 illustrates one embodiment of fixed hinge portion 5 of a mobile device 10, with which an automatically recognizable hardware accessory 13 is coupleable. As shown, fixed hinge portion 5 of the mobile device is a cavity. Cavity 5 is interposed between two rotatable hinge portions 3 and 4 which allow a first casing portion 7 to be hingedly openable and closable with respect to a second casing portion 9, for increased compactness. The first casing portion 7 is generally the outer face of the mobile device display, and the second casing portion 9 is generally the outer face of the keyboard and of the circuitry housing. A socket is formed on one longitudinal end 6 of the recessed hinge portion 5, and is provided with a plurality of recessed portions 8, for providing the necessary electrical and data connections to hardware accessory 1,5. Hardware accessory 13, which may be tubular, has a plurality of male contacts 11 projecting from one longitudinal end thereof to facilitate engagement with each corresponding recessed portions 8. It will be appreciated that longitudinal end 6 may be formed with male projections and the corresponding longitudinal end of hardware accessory 13 may be formed with female recessed portions.

Hardware accessory 13 has a processor 15 which enables the transmission of data to the main processor 17 of mobile device 10. When hardware accessory 13 is coupled to fixed hinge portion 5, main processor 17 automatically recognizes hardware accessory 13 and the operating system is automatically reconfigured so that data transmission can proceed between accessory processor 15 and main processor 17.

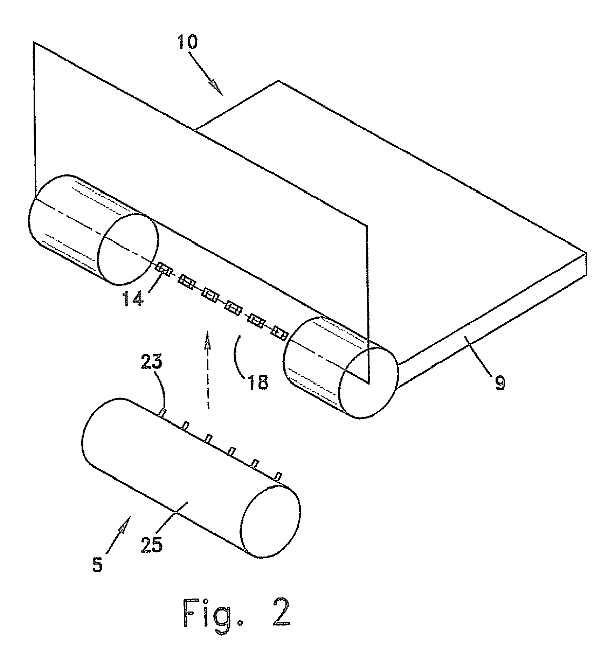

In another embodiment of the invention illustrated in Fig. 2, cavity 5 of the fixed hinge portion has a plurality of recessed portions 14 formed on circumferential wall 18 of the cavity which is contiguous with casing 9 of mobile device 10. Hardware accessory 25 has a plurality of protruding contacts 23 which radially protrude from the periphery thereof, to mate with corresponding recessed portions 14.

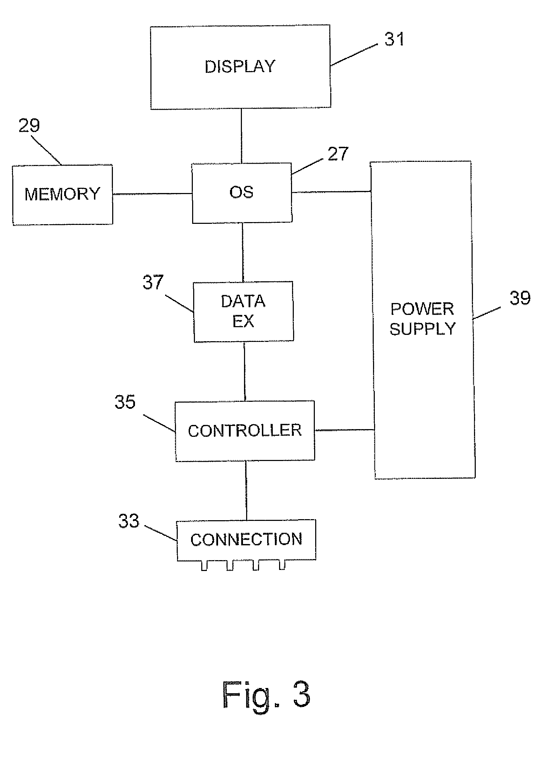

Fig. 3 schematically illustrates the system of the present invention, which is generally designated by numeral 30. System 30 comprises operating system (OS) 27 of the mobile device which is operable to automatically recognize an accessory coupled to the fized hinge portion, memory device 29 for booting OS 27, display 31, mating connection 33 disposed within the cavity of the fixed hinge portion, controller 35 connected to mating connection 33 for operating the hardware accessory, data exchange 37 in electrical communication with both controller 35 and OS 27, and power supply 39 for both OS 33 and controller 35.

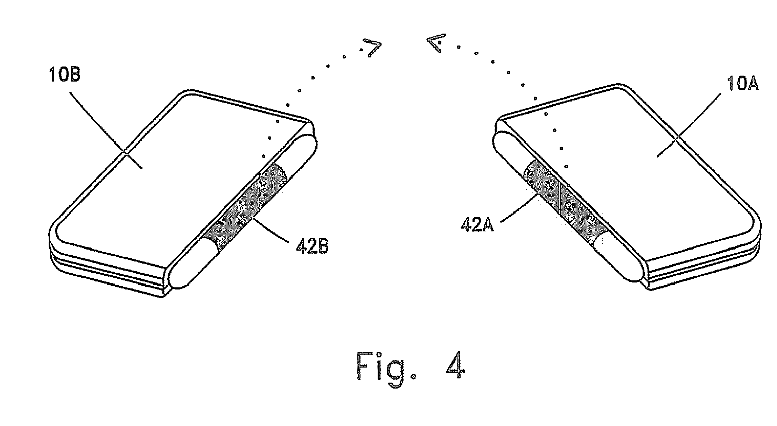

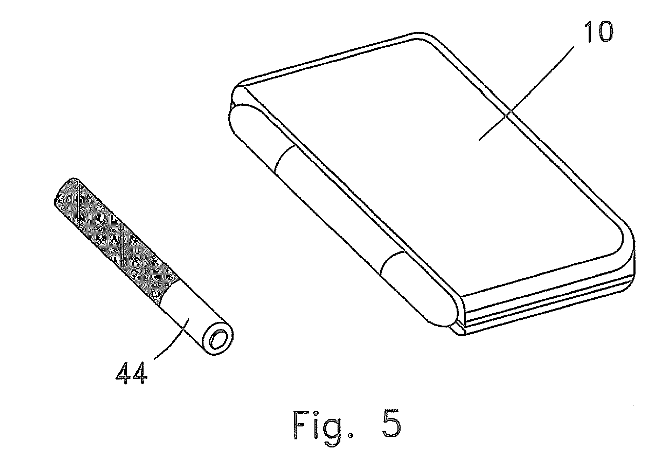

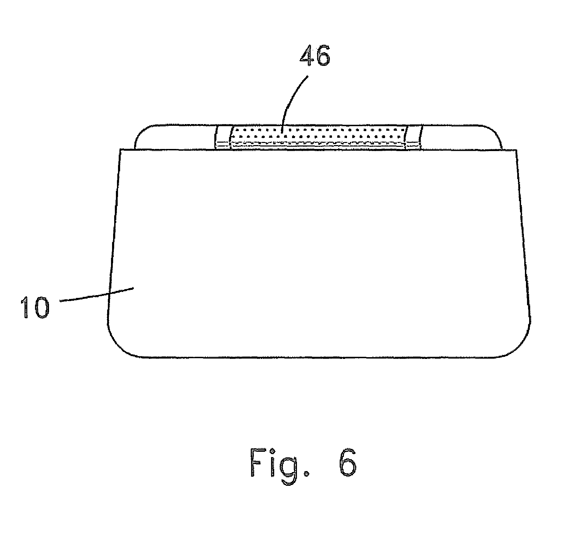

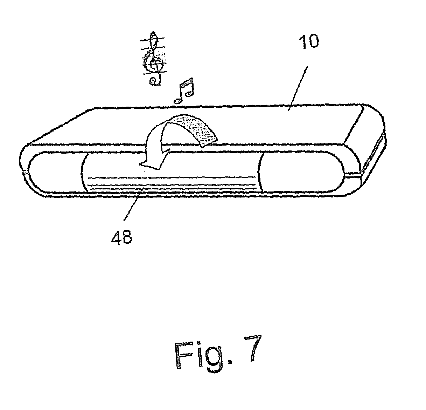

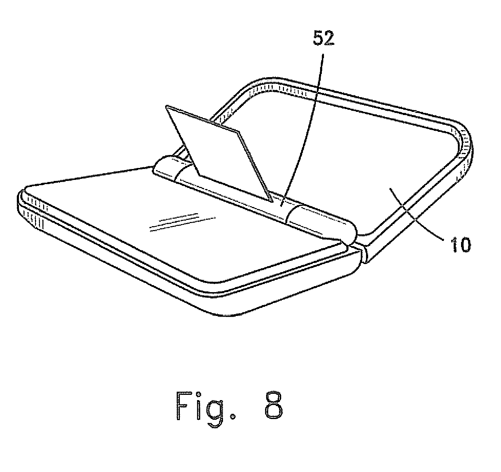

The following are exemplary hardware accessories that can be coupled with the mobile device of the invention:
A) Detachable Short-Range Transceiver - As shown in Fig. 4, the hardware accessory may be embodied by a detachable short-range transceiver which is coupleable with the mating connection of the fixed hinge portion. The transceiver enables short-range communication between two mobile devices, e.g. by means of instant messaging during the course of a meeting without disturbing the proceedings. When accessory 42A is coupled to mobile device 10A, the OS determines whether another mobile device 10B to which is coupled transceiver 42B is located within the short range vicinity of mobile device 10A. Once the OS identifies another transceiver-coupled mobile device which is located within the short range vicinity thereof, an enabling signal is generated, such as by a textual message on the display of mobile device 10A, and a short-range communication can proceed directly between mobile devices 10A and 10B according to a suitable short range data transmission protocol, without having to be transmitted to an intermediary base station.
B) Portable Memory - As shown in Fig. 5, hardware accessory 44 may be embodied by a portable memory unit, which is coupleable with the mating connection of the fixed hinge portion. The portable memory unit may be a disk-on-key for increasing the memory capabilities of mobile device 10. A selected software application or musical program may therefore be uploaded to the OS, to increase enjoyment during use of the mobile device.
C) Music Quality Enhancer - Hardware accessory 44 shown in Fig.5 may be embodied by a unit such as an equalizer or mixer, which is adapted to enhance the quality of the music being listened to by the user.
D) Music Player - Hardware accessory 44 shown in Fig. 5 may be embodied by a music player such as an MP3 player. The music player may also comprise a remote control device, which is in communication with earphones provided with a receiver, e.g. a blue tooth receiver.
E) Speaker - Hardware accessory 46 shown in Fig. 6 may be embodied by a speaker. The speaker may enunciate a predetermined tone, e.g. a tone commonly referred to as a ringtone, which is indicative that mobile device 10 has performed a desired operation, such as receiving an e-mail message or transmitting an instant messaging message.
F) Visual Output - Hardware accessory 48 illustrated in Fig. 7 may have a rotatable cylindrical housing. The housing has a mirror-ball finish. The housing rotates to provide a distinctive visual output, which may be accompanied by a distinctive tone, as an incoming call or e-mail message is received.
G) Memory Card Reader - Hardware accessory 52 illustrated in Fig. 8 is embodied by a memory card reader. After a user introduces a memory card into the reader, pictures and other data such as contact information may be stored in the memory of mobile device 10 and transmitted thereinafter to a remote location by a suitable data network. Hardware accessory 52 may also function as a log-in device, to allow, for example, employees at remote locations to access security-sensitive equipment or to indicate when their work day begins by entering an identification number. Following a log-in operation, mobile device 10 transmits a signal associated with information that was received during the log-in operation via a suitable wireless network to a server. The slot through which the memory card is introduced into the reader may be accessible internally to mobile device 10, i.e. adjacent to the inner faces of the casing portions, as shown, or alternatively, may be accessible externally to the mobile device. A company logo may be printed on the reader.
H) Interface with RF Network Based Services - A user 55 that has coupled a hardware accessory 57 embodied by an interface with an RF network based service is able to access the corresponding RF network. One embodiment of the interface is an interface for a wireless mesh network generated by the connection of a plurality of wireless access points, commonly referred to as a WiFi network, to allow communication with users over limited distances up to approximately 10 km, until an adjacent access point. Another embodiment is an interface for a Global Positioning System (GPS), to provide users of mobile devices with instantaneous positioning data needed to carry out a desired communication link. Accessory 57 may also be used to interface with a wireless RF-based television network or to carry out monetary transactions.

While some embodiments of the invention have been described by way of illustration, it will be apparent that the invention can be carried out with many modifications, variations and adaptations, and with the use of numerous equivalents or alternative solutions that are within the scope of persons skilled in the art, without departing from the spirit of the invention or exceeding the scope of the claims.

## Claims

1. A mobile device, comprising a first casing portion, a second casing portion comprising circuitry, first and second separated pivotable hinge portions connecting said first and second casing portions to allow said first casing portion to be hingedly openable and closable with respect to said second casing portion, and a fixed hinge portion interposed between said first and second pivotable hinge portions, said fixed hinge portion is formed with a cavity in which is mounted a mating connection suitably configured such that a hardware accessory adapted to increase mobile device functionality is coupleable therewith.

2. The mobile device according to claim 1, wherein the hardware accessory has an independent processor which is automatically recognizable and configurable by a mobile device main processor when the hardware accessory is coupled with the fixed hinge portion.

3. The mobile device according to claim 1, wherein the hardware accessory has a plurality of contacts projecting from one longitudinal end thereof, said contacts being engageable with corresponding recessed portions located at one longitudinal end of the cavity.

4. The mobile device according to claim 1, wherein the hardware accessory has a plurality of contacts which radially protrude from a periphery thereof, said contacts being adapted to couple with corresponding recessed portions formed on a circumferential wall of the cavity which is contiguous with the second casing portion.

5. The mobile device according to claim 1, wherein the hardware accessory is selected from the group of detachable short-range transceiver, portable memory unit, music quality enhancer, music player, speaker for enunciating a predetermined tone after the mobile device has performed a desired operation, visual output device, memory card reader, and an interface with a service based on a radio frequency network.

6. The mobile device according to claim 1, in which the hardware accessory, when attached to the device, is charged from the main battery of said mobile device with reduced charging current.

7. The mobile device according to claim 1, in which whenever the main battery of said mobile device is charged from a power supply, the hardware accessory, when attached to the device, is charged from the main battery of said mobile device at a full rate of charging current.
